# EUROPÄISCHE PATENTSCHRIFT

(11) **EP 2 655 287 B1**
(45) Veröffentlichungstag und Bekanntmachung des Hinweises auf die Patenterteilung: **27.03.2019**
(21) Anmeldenummer: 11805530.0
(22) Anmeldetag: 23.12.2011
(51) Int. Cl.: A61C 5/77, A61C 13/00, A61C 13/08, A61C 13/20

(54) **VERFAHREN ZUR HERSTELLUNG EINER DENTAL-RESTAURATION MITTELS CAD-CAST-VERFAHREN**
METHOD FOR PRODUCING A DENTAL RESTORATION BY CAD CASTING
PROCÉDÉ POUR L'ÉLABORATION D'UNE RESTAURATION DENTAIRE AU MOYEN D'UN PROCÉDÉ DE COULÉE CAD

(30) Priorität: 23.12.2010 DE 102010064142
(43) Veröffentlichungstag der Anmeldung: 30.10.2013
(73) Patentinhaber: BEGO Bremer Goldschlägerei Wilh.-Herbst GmbH & Co KG, 28359 Bremen (DE)
(72) Erfinder: DIERKES, Stephan, 28357 Bremen (DE); SEIFERT, Severin, 28325 Bremen (DE); STRIETZEL, Roland, 28865 Lilienthal (DE)
(74) Vertreter: Eisenführ Speiser
(86) Internationale Anmeldenummer: PCT/EP2011/073997
(87) Internationale Veröffentlichungsnummer: WO 2012/085285

(56) Entgegenhaltungen:
- EP-A2- 1 661 529
- WO-A2-2008/066891
- DE-A1- 10 223 883

## Beschreibung

Die vorliegende Erfindung betrifft ein neues Verfahren zur Herstellung einer Dental-Restauration (D) mittels CAD-Cast-Verfahren nach Anspruch 1.

Weitere Aspekte der vorliegenden Erfindung ergeben sich aus der nachfolgenden Beschreibung, den Beispielen sowie den beigefügten Patentansprüchen.
In der klassischen Zahntechnik erfolgt beim Gießen einer Dental-Restauration, insbesondere eines Modellgusses oder von Kronen und Brücken, die Gestaltung eines Modells aus Wachs oder einem lichtaushärtenden Kunststoff auf einem zuvor angefertigten Positivmodell, welches die Mundsituation des Patienten oder einen Teil davon darstellt. Die dreidimensionalen Ausmaße des Wachs- bzw. Kunststoff-Modells sind daher denen der herzustellenden Dental-Restauration identisch. Das Wachs- bzw. Kunststoff-Modell wird üblicherweise mit einer Einbettmasse eingebettet und nach Aushärten der Einbettmasse ausgebrannt, so dass eine Gießform erhalten wird. Anschließend wird das gewünschte Gussmaterial in die hergestellte Gießform gegossen, so dass nach Abkühlen des Gussmaterials die Dental-Restauration erhalten wird.

DE 10223883 A1 offenbart ein Verfahren, in welchem ein angefertigtes Positiv-Modell des Gebisses bereits durch Expansion des für das Positivmodell verwendeten Materials während des Aushärtens expandiert ist. Die Modellation einer Restauration aus einem Modellierwerkstoff erfolgt anschließend auf dem Positivmodell, welches anschließend in eine quarzfreie, aushärtbare Einbettmasse eingebettet wird. Neue Entwicklungen in der Zahntechnik basieren auf der CAD/CAM-Technologie. Hierbei erfolgt die Gestaltung des Wachs- bzw. Kunststoff-Modells nicht mehr auf einem Positiv-modell wie oben beschrieben, sondern virtuell. Um dreidimensionale, digitale Daten zu erhalten, wird üblicherweise zunächst entweder die Dentition bzw. ein Teil der Dentition des Patienten im Mund des Patienten gescannt oder es wird zuerst ein Abdruck der Dentition bzw. eines Teiles der Dentition des Patienten angefertigt, welcher anschließend gescannt wird. Auf Basis des erhaltenen Datensatzes wird anschließend üblicherweise ein Wachs- oder Kunststoff-Modell mittels Drucken oder Stereolithographie aufgebaut, um ein Modell zu erhalten, welches hinsichtlich seiner räumlichen Ausmaße der herzustellenden Dental-Restauration entspricht und anschließend (als Arbeitsmodell) gemäß dem klassischen, oben geschilderten Verfahren mit einer Einbettmasse ummantelt wird, um nach Entfernen des Wachs- bzw. Kunststoff-Modells (üblicherweise durch Ausbrennen) eine Gießform zu erhalten, die mit einem Gussmaterial ausgegossen wird, um die gewünschte Dental-Restauration zu erhalten. Solche Verfahren sind u. a. in folgenden Veröffentlichungen beschrieben: US 7463942B2, US 7383094B2, US 669134B2, US 6915178B2, US 6957118B2, DE 3003435A1, [Schweiger: "Rapid Prototyping - Technik der Zukunft?", Dental-Iabor, 7 (2004), S. 1109] und [Schweiger: "Rapid Prototyping-Neue Fertigungswege in der Zahntechnik und Zahnmedizin", DIGITAL_DENTAL.NEWS, 2 (2008), S. 36].

EP 1661529 A2 und WO 2008/066891 A2 offenbaren Herstellungsverfahren, in denen bereits das virtuelle Modell gegenüber der herzustellenden Restauration expandiert ist. Im Stand der Technik ist bekannt, bei der Herstellung zahntechnischer Gussteile eine feuerfeste Einbettmasse zu verwenden, deren Expansionswerte die unvermeidbare Kontraktion der verwendeten Gussmaterialien (beim Abkühlen des Gussmaterials nach dem Ausgießen der Gießform) auszugleichen.
Denn nach dem Gießen verkleinern sich beim Abkühlen des erstarrten Gussmaterials auf Grund der Wärmeausdehnung des festen Gussmaterials, sowie evtl. Änderungen des Kristallaufbaus, die Gussteile. Durch die Kontraktion des Gussmaterials beim Abkühlen des erstarrten Gussteils ändern sich die ursprünglichen Maße, es findet eine sogenannte "feste Schwindung" statt. Im Rahmen der vorliegenden Erfindung ist unter "fester Schwindung" folglich die beim Abkühlen nach Erreichen der Erstarrungstemperatur des Gussmaterials bzw. der Solidustemperatur einer als Gussmaterial verwendeten Metalllegierung auf Raumtemperatur erfolgende Schwindung zu verstehen. Diese ist in der Regel je nach Gussmaterial verschieden. Das Maß der festen Schwindung bestimmter Gussmaterialien wird üblicherweise als Schwindmaß, stoffbezogen durch den Längenausdehnungskoeffizienten α (auch linearer Wärmeausdehnungskoeffizient oder Wärmedehnung genannt), angegeben.

Im Stand der Technik wird versucht, der Kontraktion des Gussmaterials, d.h. der festen Schwindung, durch eine die Kontraktion (teilweise oder vollständig) ausgleichende Expansion der Einbettmasse zu begegnen. Zur Steuerung der Expansionswerte der Einbettmasse wird dieser häufig Quarz oder eine andere Modifikation von kristallinem SiO₂ (z. B. Cristobalit) zugegeben. Eine weitere Steuerung der Expansionseigenschaften der Einbettmasse wird durch Art und Konzentration des zum Anmischen der Einbettmasse verwendeten Anmisch-Liquids, insbesondere durch Art und Konzentration darin enthaltener Siliziumdioxidnanopartkel, erreicht. Die Gesamtexpansion der Einbettmasse bis hin zur aus der aushärtenden Einbettmasse resultierenden Gießform setzt sich üblicherweise aus der Abbindeexpansion, d. h. der Expansion der Einbettmasse beim Aushärten, sowie gegebenenfalls der thermischen Expansion der Einbettmasse, welche in der Regel bei einem Ausbrennen eines eingebetteten Wachs- bzw. Kunststoff-Modells auftritt, zusammen. Üblicherweise verwendete Einbettmassen sind demnach so ausgelegt, dass sie durch ihre Abbindeexpansion und gegebenenfalls die thermische Expansion die feste Schwindung des Gussmaterials beim Abkühlen (i.d.R. auf Raumtemperatur) kompensieren können. Demnach werden üblicherweise in Abhängigkeit des verwendeten Gussmaterials eine geeignete Einbettmasse und das dazugehörige Anmisch-Liquid ausgewählt.

Ein solches Vorgehen birgt jedoch auch Nachteile. So wird, wie oben beschrieben, in solchen Einbettmassen häufig kristallines SiO₂ eingesetzt, um die erforderliche thermische Expansionsfähigkeit zu erreichen. Bei Verwendung von Quarz oder anderen Modifikationen von kristallinem SiO₂ besteht jedoch insbesondere bei langjähriger, ungeschützter Exposition in einem Dentallabor das Risiko einer Silikose oder sogar einer Lungenkrebs-Erkrankung.

Darüber hinaus ist insbesondere die Abbindeexpansion der üblicherweise verwendeten Einbettmasse mit großen Schwankungen verbunden. So fällt diese (u.a. in Abhängigkeit von Art und Beschaffenheit des verwendeten Binders) insbesondere bei unterschiedlichen Bedingungen beim Anrühren (z.B. im Hinblick auf Verarbeitungstemperatur, Anrührdauer und -geschwindigkeit) unterschiedlich aus. Dabei gilt: Je größer der Betrag der maximal zu erreichenden Abbindeexpansion der Einbettmasse ist, umso höher ist die absolute Schwankung.

Ein weiterer Nachteil eines solchen Vorgehens besteht darin, dass für verschiedene Gussmaterialien mit unterschiedlichen festen Schwindungen in der Regel jeweils unterschiedliche Kombinationen aus Einbettmasse und Anmisch-Liquid gewählt werden müssen. So müssen beim Wechsel des zu verwendenden Gussmaterials in der Regel Einbettmasse und/oder Anmisch-Liquid gewechselt werden, was den Arbeits- bzw. Produktionsverlauf erheblich verzögern bzw. beeinträchtigen kann.

Zudem ist es insbesondere bei phosphatgebundenen Einbettmassen nicht möglich, Dental-Restaurationen mit unterschiedlichen Indikationen in einer Gießform - bei gleichzeitig guter Passung - zu erzeugen. So müssen beispielsweise ein "6-er" Teleskop und ein Frontzahnteleskop getrennt voneinander (mit unterschiedlichen Anmisch-Liquid-Konzentrationen) eingebettet und gegossen werden.

Eine weitere Herausforderung bei der Herstellung von passgenauen Dental-Restaurationen resultiert aus Verzerrungen durch ungleichmäßiges Erstarren des Gussmaterials beim Abkühlen nach dem Ausgießen der Gießform. So kühlen beispielsweise dünnere Bereiche schneller ab als dickere. Im Stand der Technik ist keine einheitliche Vorgehensweise beschrieben, um solche Verzerrungen beim Gießen zu vermeiden. Vereinzelte Versuche, dieses Problem zu lösen, sind beispielsweise unter dem Begriff "Kerneinbettung" bekannt. Ein Nachteil dieses Verfahrens liegt jedoch darin, dass zwei unterschiedliche Einbettmassen benötigt und angerührt werden müssen. Darüber hinaus verzögert sich der Herstellungsprozess, da die zweite Einbettmasse erst hinzugegeben werden kann, wenn die erste Einbettmasse ausgehärtet bzw. abgebunden ist.

Im Ergebnis besteht demnach Bedarf an einem verbesserten Verfahren zur Herstellung von passgenauen Dental-Restaurationen, vorzugsweise mittels CAD-Cast-Verfahren, wobei die vorangehend erwähnten Nachteile vermieden oder zumindest reduziert werden können.

Weitere Aspekte der der vorliegenden Erfindung zugrundeliegenden Aufgabe ergeben sich aus der nachfolgenden Beschreibung sowie insbesondere den beigefügten Patentansprüchen.
Die primäre Aufgabe der vorliegenden Erfindung wird gelöst durch ein Verfahren zur Herstellung einer Dental-Restauration (D) mittels CAD-Cast-Verfahren, umfassend die Schritte nach Anspruch 1.

Beim "CAD-Cast-Verfahren" wird auf Basis eines CAD-Modells (hier: virtuelle Dental-Restauration (VD)) ein einbettbares Modell (hier: Modell (M)) hergestellt, welches anschließend mit einer Einbettmasse eingebettet wird, um nach dem Entfernen des Modells aus der ausgehärteten Einbettmasse eine Gießform zu erhalten, die mit dem gewünschten Gussmaterial gefüllt bzw. ausgegossen werden kann.

Im Zusammenhang mit der vorliegenden Erfindung handelt es sich bei einer Dental-Restauration (D) vorzugsweise um Gerüste für den Zahnersatz, insbesondere für Kronen, Brücken und Prothesen oder für Hilfsteile (z. B. Stege und Geschiebe).

Das Erfassen der dreidimensionalen, digitalen Daten in Schritt a) erfolgt vorzugsweise durch a1) Scannen der Dentition bzw. eines Teils der Dentition im Mund des Patienten oder a2) Anfertigen eines Abdrucks der Dentition oder eines Teils der Dentition des Patienten und anschließendes Scannen des Abdrucks oder eines Teils des Abdrucks erfasst werden. Hierbei wird auf für den Fachmann übliche Scan-Methoden zurückgegriffen.

In Schritt b) wird unter Verwendung der in Schritt a) erfassten dreidimensionalen, digitalen Daten eine virtuelle Dental-Restauration (VD) entworfen, welche gegenüber der herzustellenden Dental-Restauration (D) expandiert ist. Auf Basis dieser expandierten, virtuellen Dental-Restauration (VD) wird in Schritt c) ein Modell (M), vorzugsweise ein Wachs- oder Kunststoff-Modell (M), gefertigt, welches ebenfalls gegenüber der herzustellenden Dental-Restauration (D) expandiert ist, vorzugsweise in gleichem Maße wie die virtuelle Dental-Restauration (VD). Dementsprechend entspricht das Modell (M) hinsichtlich seiner Abmessungen vorzugsweise vollständig der entworfenen, virtuellen Dental-Restauration (VD).

Im Rahmen des vorliegenden Textes ist der Ausdruck "gegenüber der herzustellenden Dental-Restauration (D) expandiert" so zu verstehen, dass die virtuelle Dental-Restauration (VD) bzw. das Modell (M) gegenüber der herzustellenden Dental-Restauration (D) entweder vollständig oder zumindest teilweise, d. h. in einem oder mehreren (ausgewählten) Bereichen, expandiert ist. Hierdurch können vorteilhafterweise sowohl (im Rahmen einer vollständigen Expansion) eine beim Abkühlen des Gussmaterials (GM) auftretende feste Schwindung (s. oben) des Gussmaterials (GM) insgesamt als auch (im Rahmen einer gegebenenfalls zusätzlichen, zumindest teilweisen Expansion in ausgewählten Bereichen) etwaige Verzerrungen, insbesondere aufgrund von unterschiedlich dicken Bereichen der herzustellenden Dental-Restauration (D), vollständig oder zumindest teilweise ausgeglichen werden, so dass etwaige Fehlpassungen vermieden oder zumindest reduziert werden können. Insbesondere dünnwandige Bereiche bzw. Teile (zum Beispiel Klammern beim Modellguss oder Käppchen bei Brücken) können erfindungsgemäß vorteilhafterweise mit einer zusätzlichen Expansion versehen werden. Hierdurch ist es vorteilhafterweise insbesondere möglich, große Brücken mit hoher Passung zu erzeugen.

Wie vorangehend beschrieben, wird die unvermeidbare feste Schwindung des Gussmaterials üblicherweise, wie im Stand der Technik beschrieben, alleinig durch die Gesamtexpansion der Einbettmasse kompensiert. Dabei setzt sich die Gesamtexpansion der Muffel, d. h. der aus der Einbettmasse resultierenden Gießform, bei den gängigen Einbettmassensystemen aus der Abbindeexpansion sowie gegebenenfalls einer thermischen Expansion der Einbettmasse (s. oben) zusammen. Die Auswahl der Einbettmasse sowie Art und Konzentration des Anmisch-Liquids werden insbesondere in Abhängigkeit von dem eingesetzten Gussmaterial gewählt.

Gemäß der vorliegenden Erfindung können jedoch vorteilhafterweise etwaige Dimensionsänderungen, die insbesondere durch die feste Schwindung des Gussmaterials (GM) oder etwaige Verzerrungen bedingt sind, bereits beim Entwerfen der virtuellen Dental-Restauration (VD) und beim Fertigen des Modells (M) berücksichtigt werden. Hierbei kann zudem vorteilhafterweise die Gesamtexpansion der verwendeten Einbettmasse (EM) berücksichtigt werden. So können im Rahmen eines erfindungsgemäßen Verfahrens beliebige Einbettmassen (EM), Anmisch-Liquide und Gussmaterialen (GM) kombiniert werden. Es ist für den Fachmann selbstverständlich, dass bei der Auswahl jedoch vorzugsweise sichergestellt sein sollte, dass die Gesamtexpansion der Einbettmasse (EM) kleiner ist als der Betrag der (zu erwartenden) festen Schwindung des Gussmaterials (GM).

Die (zu erwartende) feste Schwindung bzw. das Schwindmaß eines Gussmaterials (GM) lässt sich in ausreichender Näherung ausgehend vom linearen Wärmeausdehnungskoeffzienten des Gussmaterials (GM) durch Extrapolation (bis zur Erstarrungs- bzw. Solidustemperatur) bestimmen. Der lineare Wärmeausdehnungskoeffzient wird vorzugsweise mittels Dilatometer (z.B. mittels DIL 801 der Firma Bähr) durch Messungen im Bereich von der Raumtemperatur bis vorzugsweise zu einer Temperatur von 600 °C bestimmt.

Im Folgenden sind exemplarisch übliche Bereiche der festen Schwindungen bzw. übliche Schwindmaße von für dentale Zwecke geeigneten, ausgewählten Gussmaterialien genannt (jeweils bezogen auf die relative Längenänderung):
- Edelmetallfreie Legierungen bzw. Gussmaterialien: z.B. CoCr-Legierungen (feste Schwindung im Bereich von etwa 2,0 % bis etwa 2,6 %), NiCr-Legierungen (feste Schwindung im Bereich von etwa 1,8 % bis etwa 2,3 %), Titan (feste Schwindung im Bereich von etwa 1,5 % bis etwa 1,6%),
- Edelmetalle bzw. Legierungen davon: z.B. hochgoldhaltige Legierungen oder Palladium-Basis-Legierungen (feste Schwindung im Bereich von etwa 1,3 % bis etwa 2 %),
- Silber-Basis-Legierungen: feste Schwindung im Bereich von etwa 1,7 % bis etwa 2,1 %.
Da die Kompensation der festen Schwindung des verwendeten Gussmaterials (GM) erfindungsgemäß vollständig oder zumindest teilweise durch die Expansion der virtuellen Dental-Restauration (VD) und des Modells (M) erzielt wird (wie oben beschrieben) und kein bzw. kein vollständiger Ausgleich durch die Expansion der verwendeten Expansionsmasse erfolgen muss, ermöglicht das erfindungsgemäße Verfahren die Herstellung von Dental-Restaurationen aus unterschiedlichen Gussmaterialien (GM), wobei kontinuierlich mit einer bestimmten Einbettmasse und einem dazugehörigen Anmisch-Liquid gearbeitet werden kann.

Im erfindungsgemäßen Verfahren (wie oben beschrieben), ist die virtuelle Dental-Restauration (VD) und/oder das Modell (M) gegenüber der herzustellenden Dental-Restauration (D) insgesamt um 0,025 bis 3 %, bevorzugt um 1 bis 2,5 % expandiert, bezogen auf die relative Längenänderung. Das heißt, die (Expansions-)Änderung ist bezogen auf die Länge.

Eine zusätzliche Expansion in ausgewählten Bereichen der virtuellen Dental-Restauration (VD) bzw. des Modells (M) liegt gemäß der vorliegenden Erfindung im Bereich von bei 0,025 bis 1 %, besonders bevorzugt im Bereich von 0,05 bis 0,2 %, wobei die (Expansions)Änderung auf die Länge bezogen ist, d.h. bezogen auf die relative Längenänderung.

Im erfindungsgemäßen Verfahren (wie oben beschrieben), sind die virtuelle Dental-Restauration (VD) und/oder das Modell (M) gegenüber der herzustellenden Dental-Restauration (D) nicht einheitlich expandiert.

Insbesondere dünnwandige Bereiche bzw. Teile (zum Beispiel Klammern beim Modellguss oder Käppchen bei Brücken) sind erfindungsgemäß gegenüber anderen Bereichen bzw. Teilen mit einer anderen bzw. zusätzlichen Expansion versehen. Folglich sind im erfindungsgemäßen Verfahren (wie vorangehend beschrieben) ein oder mehrere Bereiche der virtuellen Dental-Restauration (VD) und/oder des Modells (M) gegenüber der herzustellenden Dental-Restauration (D) (im Vergleich zu den übrigen Bereichen) zusätzlich expandiert, wobei diese zusätzliche Expansion in einem oder mehreren ausgewählten Bereichen der virtuellen Dental-Restauration (VD) bzw. des Modells (M) im Bereich von bei 0,025 bis 1 % liegt, besonders bevorzugt im Bereich von 0,05 bis 0,2 %, wobei die (Expansions-)Änderung auf die Länge bezogen ist, d.h. bezogen auf die relative Längenänderung.
Im Rahmen des erfindungsgemäßen Verfahrens ist insbesondere die Auswahl von Einbettmasse (EM), dazugehörigem Anmisch-Liquid und zu verwendendem Gussmaterial (GM) beim Entwerfen der virtuellen Dental-Restauration (VD) gemäß Schritt b) zu berücksichtigen.
Im Rahmen des erfindungsgemäßen Verfahrens können vorteilhafterweise etwaige, zu erwartende Verzerrungen (wie oben beschrieben) berücksichtigt werden, wobei ein oder mehrere Bereiche der virtuellen Dental-Restauration (VD) sowie des Modells (M) gegenüber der herzustellenden Dental-Restauration (D) so expandiert sind, dass etwaige im Rahmen des weiteren Herstellungsprozesses auftretende Verzerrungen zumindest teilweise oder bevorzugt vollständig kompensiert werden.
Beim Entwerfen der virtuellen Dental-Restauration (VD) im Rahmen des erfindungsgemäßen Verfahrens werden daher vorzugsweise neben der Einbettmasse (EM), dem dazugehörigem Anmisch-Liquid und dem zu verwendenden Gussmaterial (GM) zudem weitere Faktoren, z. B. unterschiedlich dicke Bereiche oder unterschiedlich ausgestaltete Elemente und deren Anordnung in der herzustellenden Dental-Restauration (D) oder die Größe der herzustellenden Dental-Restauration (D), berücksichtigt.
Ferner können im Rahmen eines erfindungsgemäßen Verfahrens vorteilhafterweise Größe und/oder Abkühlgeschwindigkeit der Gießform sowie des Gussmaterials (GM) berücksichtigt werden. In der Regel erfolgt das Abkühlen der Gießform und das Abkühlen bzw. Erstarren des Gussmaterials (GM) zwar an Luft bei Raumtemperatur. Jedoch ist es teilweise vorteilhaft, die Abkühlgeschwindigkeit zu erhöhen, beispielsweise durch Verwendung eines (gekühlten) Wasserbads. Ein rascheres Abkühlen kann sich positiv auf die Gefügestruktur der Dental-Restauration (D) auswirken. So können beispielsweise Dental-Restaurationen (D) erhalten werden, welche eine verbesserte Festigkeit und/oder Bruchdehnung aufweisen. Zudem lässt sich durch eine raschere Abkühlung der Herstellungsprozess insgesamt beschleunigen. Eine erhöhte Abkühlgeschwindigkeit führt jedoch dazu, dass der Temperaturgradient innerhalb des Gussmaterials (GM) (von außen nach innen) erhöht wird, so dass die Gefahr besteht, dass das Gussmaterial (GM) ungleichmäßig erstarrt, was wiederum in Verzerrungen und damit verbundenen Fehlpassungen resultieren kann. Das erfindungsgemäß bereitgestellte Verfahren ermöglicht jedoch vorteilhafterweise, solche Fehlpassungen zu reduzieren oder sogar zu vermeiden, indem bereits beim Entwerfen der virtuellen Dental-Restauration (VD) eine zu erwartende Verzerrung, die sich empirisch ermitteln lässt, berücksichtigt wird (zur empirischen Bestimmung solcher Verzerrungen siehe auch: Egner-Walter, "Vorhersage des Verzugs dünnwandiger Druckgußteile", Giesserei 93, 12 (2006), S. 26). Folglich eignet sich ein erfindungsgemäßes Verfahren gegenüber herkömmlichen Verfahren insbesondere für CAD-Cast-Verfahren, bei denen die Abkühlgeschwindigkeit erhöht werden soll.

Zusammengefasst werden beim Entwerfen der virtuellen Dental-Restauration (VD) im Rahmen des erfindungsgemäßen Verfahrens vorzugsweise verschiedene, vorangehend beschriebene Faktoren berücksichtigt, um den Grad der Expansion (sowie gegebenenfalls (zusätzliche) Expansionen für ausgewählte Bereiche) gegenüber der herzustellenden Dental-Restauration (D) zu bestimmen. Hierzu wird vorzugsweise ein Programm eingesetzt, welches automatisch oder durch Eingabe des Benutzers die unterschiedlichen, zu berücksichtigenden Faktoren erfasst. Auf Basis dieser erfassten Faktoren können dann der virtuellen Dental-Restauration (VD) automatisch oder durch den Benutzer ein oder mehrere unterschiedliche Vergrößerungsfaktoren (gegenüber der herzustellenden Dental-Restauration (D)) zugewiesen werden.

Vorzugsweise wird in Schritt b) des erfindungsgemäßen Verfahrens beim Entwerfen der virtuellen Dental-Restauration (VD) zunächst in Abhängigkeit von der zu erwartenden festen Schwindung des Gussmaterials (GM) und gegebenenfalls der Gesamtexpansion der Einbettmasse (EM) ein einheitlicher Vergrößerungsfaktor bestimmt. Bevorzugt werden dann weitere, gegebenenfalls unterschiedliche Vergrößerungsfaktoren für unterschiedliche Bereiche bzw. Elemente der Dental-Restauration (empirisch) bestimmt, um gegebenenfalls zu erwartende Verzerrungen auszugleichen. Gegebenenfalls werden die unterschiedlichen Vergrößerungsfaktoren dabei zudem in Abhängigkeit von der Lage der unterschiedlichen Bereiche bzw. Elemente (empirisch) bestimmt. So erfordern beispielsweise Bereiche bzw. Elemente im Frontzahnbereich teilweise einen kleineren Vergrößerungsfaktor als Bereiche bzw. Elemente im Seitenzahnbereich.

Im Zusammenhang mit dem erfindungsgemäßen Verfahren ist es daher besonders bevorzugt, gegebenenfalls unterschiedliche Geometrien der herzustellenden Dental-Restauration bei der Erstellung der virtuellen Dental-Restauration (VD) und der Fertigung des Modells (M) zu berücksichtigen. Um eine bessere Passung der herzustellenden Dental-Restauration zu gewährleisten, können im Rahmen des erfindungsgemäßen Verfahrens zunächst (Standard-)Modelle von Standardteilen unterschiedlicher Geometrie (z.B. für Modellguss (Platte und Klammern), für Käppchen (Molar und Frontzahn) und für Brücken (3er, 6er und 9er)), jeweils mit unterschiedlichen Vergrößerungsfaktoren, gefertigt werden. Diese (Standard-)Modelle werden dann eingebettet und anschließend ausgebrannt, um entsprechende Gießformen zu erhalten. Nach dem Ausgießen der Gießformen mit dem gewünschten Gussmaterial (GM) werden die unterschiedlichen (Standard-)Dental-Restaurationen erhalten. Durch Passungstests mit den (Standard-)Dental-Restaurationen lassen sich besonders geeignete Vergrößerungsfaktoren zur Bestimmung der einzustellenden Expansion der virtuellen Dental-Restauration (VD) bzw. des Modells (M) insgesamt sowie für einzelne Bereiche bzw. Elemente davon bestimmen.

Das Gussmaterial (GM) zum Füllen, vorzugsweise zum Ausgießen der Gießform in Schritt f) ist vorzugsweise ausgewählt aus der Gruppe bestehend aus Cobalt, Nickel, Chrom, Titan, Gold, Silber, Palladium und Legierungen davon.

Das im vorliegenden Text beschriebene Modell (M) ist vorteilhafterweise dazu geeignet, in eine Einbettmasse (EM) eingebettet und nach Aushärten der Einbettmasse (EM) daraus entfernt zu werden, wobei das Entfernen vorzugsweise durch Ausbrennen erfolgt.

Vorzugsweise ist das Modell (M) ein Wachs- oder Kunststoff-Modell (M). Im Rahmen der vorliegenden Erfindung bevorzugt zu verwendende Verfahren zur Fertigung von Modellen (M) sind z.B. das Fräsen, die Stereolithographie, das Lasersintern, das Laserschmelzen, das 3D-Drucken und das Fused Deposition Modelling (FDM), wobei der Verbrennungsrückstand für das Modellmaterial vorzugsweise weniger als 0,1% beträgt (siehe hierzu EN ISO 15854:2005 (D)). Besonders bevorzugt ist das Modell (M) ein Wachs- oder Kunststoff-Modell (M), welches mittels Rapid Prototyping (RP)-Verfahren gefertigt wird.

Im Rahmen der vorliegenden Erfindung können entweder ein Wachs-Modell (M) oder aber auch ein Kunststoff-Modell (M) besonders bevorzugt sein. Wachs-Modelle (M) weisen nämlich häufig ein besonders vorteilhaftes Ausschmelzverhalten auf, so dass beim Entfernen des Wachs-Modells (M) durch Ausbrennen allenfalls geringe Spannungen in der Gießform entstehen, was wiederum die Gefahr einer Fahnenbildung bzw. des Reißens der Gießform insbesondere bei großen bzw. voluminösen, herzustellenden Dental-Restaurationen reduziert. Kunststoff-Modelle (M) sind dagegen häufig im Hinblick auf die bessere Handhabbarkeit besonders bevorzugt, da diese im Vergleich zu Wachs-Modellen bei hohen Temperaturen, insbesondere bei Temperaturen bis zu 60 °C, nicht oder kaum zur Verformung neigen.

Sofern im Rahmen des erfindungsgemäßen Verfahrens eine Einbettmasse (EM) eingesetzt wird, die eine im Rahmen der Herstellung der Dental-Restauration (D) zu berücksichtigende Gesamtexpansion, d. h. eine Abbindeexpansion sowie gegebenenfalls eine thermische Expansion, erwarten lässt, welche die feste Schwindung des Gussmaterials (GM) zumindest teilweise ausgleicht, gilt vorzugsweise: Die virtuelle Dental-Restauration (VD) und das Modell (M) sind gegenüber der herzustellenden Dental-Restauration (D) so expandiert, dass die beim Abkühlen des Gussmaterials (GM) zu erwartende feste Schwindung in dem Rahmen ausgeglichen wird, dass sich einerseits die bei der Aushärtung der Einbettmasse (EM) auftretende Expansion (Abbindeexpansion) sowie gegebenenfalls eine thermische Expansion der Einbettmasse (EM) (z. B. beim Ausbrennen des Modells (M)) und die gewählte Expansion der virtuellen Dental-Restauration (VD) und andererseits die beim Abkühlen des Gussmaterials (GM) auftretende feste Schwindung vollständig oder zumindest nahezu vollständig aufheben. Hierbei ist vorzugsweise eine Einbettmasse (EM) zu verwenden, deren Gesamtexpansion geringer ist als der Betrag der festen Schwindung des Gussmaterials (GM).
Gemäß einem Aspekt der vorliegenden Erfindung ist es im Rahmen eines erfindungsgemäßen Verfahrens besonders bevorzugt, wenn die virtuelle Dental-Restauration (VD) und/oder das Modell (M) so gegenüber der herzustellenden Dental-Restauration (D) expandiert ist, dass hierdurch 25 % oder mehr, vorzugsweise 50 % oder mehr, besonders bevorzugt 75 % oder mehr der festen Schwindung des Gussmaterials (GM) ausgeglichen (kompensiert) werden.
Sofern in einem erfindungsgemäßen Verfahren (wie oben beschrieben) allein oder zumindest nahezu allein über die in den Schritten b) und c) gewählte Expansion die feste Schwindung des Gussmaterials (GM) vollständig oder zumindest nahezu vollständig ausgeglichen werden soll, ist es bevorzugt, eine Einbettmasse (EM) zu verwenden, die eine möglichst geringe Gesamtexpansion, insbesondere eine möglichst geringe Abbindeexpansion, besitzt. Eine solche Einbettmasse bietet den Vorteil, dass der bzw. die in den Schritten b) und c) zu wählenden Vergrößerungsfaktoren in erster Linie in Abhängigkeit von der festen Schwindung des Gussmaterials (GM), jedoch nicht oder zumindest kaum in Abhängigkeit von der eingesetzten Einbettmasse (EM) gewählt werden müssen. Eine solche Einbettmasse (EM) wird im Folgenden näher beschrieben.

Offenbart ist weiter eine (aushärtbare) Einbettmasse (EM) zur Verwendung in einem Verfahren zur Herstellung einer Dental-Restauration (D) mittels CAD-Cast-Verfahren, vorzugsweise zur Verwendung in einem erfindungsgemäßen Verfahren (wie oben beschrieben), umfassend oder bestehend aus
- 5 bis 50, vorzugsweise 10 bis 30 Gew.-% an Calciumaluminatzement, vorzugsweise an Tonerdezement nach DIN EN 14647,
- 40 bis 95, vorzugsweise 70 bis 90 Gew.-% an einem oder mehreren feuerfesten Füllstoffen sowie optional
- 0 bis 5 Gew.-% an Calciumsulfat und/oder
- 0 bis 6 Gew.-% an einem oder mehreren weiteren Additiven,
wobei die Einbettmasse (EM) eine lineare Abbindeexpansion von 0 bis 0,75 %, vorzugsweise von 0 bis 0,3 %, besonders bevorzugt von 0 bis 0,1 % besitzt, d.h. wobei die Einbettmasse (EM) während des Aushärtens (Abbinden), insbesondere während des Aushärtens in Schritt e) eines erfindungsgemäßen Verfahrens (wie oben beschrieben), um 0 bis 0,75 %, vorzugsweise um 0 bis 0,3 %, besonders bevorzugt um 0 bis 0,1 % expandiert, bezogen auf die relative Längenänderung, d.h. wobei die (Expansions-)Änderung auf die Länge bezogen ist..

Die "lineare Abbindeexpansion" einer Einbettmasse (EM) ist im Rahmen der vorliegenden Erfindung mit dem Aufbau nach Dreyer-Jörgensen zu bestimmen. Hierbei wird ein senkrecht stehender, mit (auszuhärtender) Einbettmasse (EM) gefüllter Muffelring an seiner Oberfläche mit einem Uhrglas abgedeckt, dessen durch die Expansion der Einbettmasse (EM) beim Aushärten bedingte Verschiebung mit einer Messuhr gemessen wird (für Details siehe: K.D. Dreyer-Jörgensen, "Study of the setting expansion of gypsum", Acta Odontol Scand, 21, 227 (1973)).

Vorzugsweise wird der Einbettmasse (EM) vor dem Einbetten des Modells (M) ein Anmisch-Liquid, umfassend Wasser oder vorzugsweise bestehend aus Wasser, zugegeben, so dass die Einbettmasse in Form eines fließfähigen Mörtels vorliegt. Das Verhältnis der Gesamtmenge (in Gew.-%) an Anmisch-Liquid, vorzugsweise an Wasser, zur Gesamtmenge (in Gew.-%) an übrigen Bestandteilen der Einbettmasse (EM) (s. hierzu oben) liegt dabei vorzugsweise im Bereich von 10:100 bis 30:100, bevorzugt im Bereich von 15:100 bis 20:100.

Im Stand der Technik bekannte dentale Einbettmassen, d. h. Einbettmassen zur Herstellung einer Dental-Restauration, bestehen üblicherweise aus dem Bindesystem Ammoniumphosphat und Magnesiumoxid. Dabei sind diese Einbettmassen, wie einleitend beschrieben, üblicherweise so ausgewählt, dass sie durch ihre Gesamtexpansion die feste Schwindung des Gussmaterials kompensieren können.

Demgegenüber ist im Rahmen der vorliegenden Erfindung jedoch eine Einbettmasse (EM) bevorzugt, welche eine besonders geringe Gesamtexpansion aufweist. Besonders bevorzugt ist eine Einbettmasse (EM) (wie oben beschrieben) zur Verwendung in einem erfindungsgemäßen Verfahren (wie oben beschrieben), wobei das Modell (M) in Schritt e) bei einer Vorwärmtemperatur, die etwa 450°C unterhalb der beim Füllen bzw. Ausgießen in Schritt f) gewählten Temperatur liegt, mittels Ausbrennen entfernt wird, und wobei die Einbettmasse (EM) beim Erwärmen von Raumtemperatur auf die Vorwärmtemperatur um 0 bis 0,75 %, vorzugsweise um 0 bis 0,5 %, vorzugsweise um 0 bis 0,3 %, besonders bevorzugt um 0 bis 0,1 % expandiert, bezogen auf die relative Längenänderung. Die Längenänderung, d.h. die relative (prozentuale) Änderung der Länge der Einbettmasse (EM) beim Erwärmen von Raumtemperatur auf die Vorwärmtemperatur ist im Rahmen der vorliegenden Erfindung mittels Dilatometer (z.B. DIL 801 der Firma Bähr) zu bestimmen (vgl. oben).

Bei dem in Schritt f) eines erfindungsgemäßen Verfahrens bevorzugt stattfindenden Ausgießen der Gießform mit Gussmaterial (GM) wird vorzugsweise in Abhängigkeit des verwendeten Gussmaterials (GM) eine (Gieß-)Temperatur in einem der folgenden Bereichen gewählt:
- 1300 °C bis 1600 °C, insbesondere bei Verwendung von edelmetallfreien Legierungen als Gussmaterial (GM) (z.B. CoCr-Legierungen oder NiCr-Legierungen),
- 1100 °C bis 1350 °C, insbesondere bei Verwendung von hochgoldhaltigen Legierungen als Gussmaterial (GM),
- 1325 °C bis 1500 °C, insbesondere bei Verwendung von Palladium-Basis-Legierungen als Gussmaterial (GM),
- 1150 °C bis 1350 °C, insbesondere bei Verwendung von Silber-Basis-Legierungen als Gussmaterial (GM), und
- 1750 °C bis 1850 °C, insbesondere bei Verwendung von Titan als Gussmaterial (GM).

Vorzugsweise liegt die Vorwärmtemperatur im Bereich von 650 bis 1250 °C, besonders bevorzugt im Bereich von 700 bis 1000 °C. Sofern Titan als Gussmaterial (GM) verwendet wird, liegt die Vorwärmtemperatur besonders bevorzugt im Bereich von 900 bis 1250 °C, wobei die thermische Expansion vorzugsweise bei einer Temperatur im Bereich von etwa 1100 °C bestimmt wird.

Das Entfernen des Modells (M) mittels Ausbrennen bei der vorangehend beschriebenen Vorwärmtemperatur führt (durch die hierdurch vorgewärmte Gussform) vorteilhafterweise zu einem besonders guten Gussergebnis. Für ein ideales Ergebnis ist die Vorwärmtemperatur in Abhängigkeit von dem verwendeten Gussmaterial (GM) zu wählen.

Tonerdezement wird als Bindemittel in der Bauindustrie schon vielseitig eingesetzt. Sowohl als reines Bindemittel aber auch in Mörtelformulierungen. Tonerdezement ist bekannt als feuerfestes Bindemittel und wird vor allem für Hochofenauskleidungen und in hochwertigen bauchemischen Formulierungen verwendet. Ebenso werden Calciumaluminate generell in Verbindung mit Calciumsulfat als ettringitbildende Bindemittelkomponenten für dichte Mörtel eingesetzt (wie z.B. in EP 1785405A2 und US2006/0118006A1 beschrieben). Auch im Bereich des (dentalen) Feingusses wurde gemäß dem Stand der Technik bereits mit Tonerdezement bzw. Calciumaluminaten als Bindemittel gearbeitet (siehe z.B. US2081558 und US2911311). Weiterhin wurden bereits dentale Füllstoffe in Kombination mit Calciumaluminatzementen als Binder vorgestellt (siehe z.B. US4689080, US6620232B1).

Vor allem für sehr hochschmelzende Legierungen (z.B. Titan- und Zirkoniumlegierungen) wurden bereits Einbettmassen mit Calciumaluminaten beschrieben (siehe z.B. EP1461173B1 und EP1611977B1). In EP1461173B1 wird beispielsweise eine Einbettmasse mit Calciumaluminaten beschrieben, die gemäß Anspruch 1 von EP1461173B1 für hochschmelzende Gussmaterialien zu verwenden ist. Als solche Gussmaterialien werden in der Beschreibung Titan und Titanlegierungen genannt. Gemäß EP1461173B1 wird jedoch im Gegensatz zur vorliegenden Erfindung die feste Schwindung des Gussmaterials nicht durch eine (bewusst gewählte) Expansion einer virtuellen Dental-Restauration (VD) bzw. eines Modells (M) (wie oben beschrieben) gegenüber der herzustellenden Dental-Restauration erreicht. Vielmehr wird gemäß EP1461173B1, wie auch einleitend im Zusammenhang mit bekanntem Stand der Technik beschrieben, eine Kompensation der festen Schwindung des Gussmaterials durch eine (ausgleichende) Expansion der Einbettmasse bewirkt. Die erforderliche Expansion der Einbettmasse wird hierbei durch Zugabe ausgewählter Bestandteile gesteuert. In diesem Zusammenhang wird beispielsweise die Reaktion von Aluminiumdioxid und Magnesiumoxid zu Spinell oberhalb von 850°C genannt, wobei die resultierende (thermische) Expansion der Einbettmasse der festen Schwindung einer (gemäß EP1461173B1 zu verwendenden) TitanLegierung entspricht. Zwar ist gemäß EP1461173B1 die feste Schwindung der TitanLegierung geringer als die von handelsüblichen Dentallegierungen (wie z.B. Gold- oder Kobalt-Chrom-Legierungen), so dass die in EP1461173B1 beschriebene Einbettmasse tendenziell eine geringe (termische) Expansion aufweist. Eine Einbettmasse wie sie im Zusammenhang mit der vorliegenden Erfindung beschrieben wird, insbesondere eine Einbettmasse mit einer linearen Abbindeexpansion wie vorangehend beschrieben, ist in EP1461173B1 jedoch nicht beschrieben.

Eine Einbettmasse (EM) (wie oben beschrieben) weist eine besonders geringe, vorzugsweise keine (lineare) Abbindeexpansion auf. Die Verwendung einer solchen bevorzugten Einbettmasse (EM) führt vorteilhafterweise dazu, dass der bzw. die Vergrößerungsfaktoren in Schritt b) eines erfindungsgemäßen Verfahrens (wie oben beschrieben) unabhängig oder zumindest annähernd unabhängig von der Gesamtexpansion der Einbettmasse (EM) bestimmt werden können. Zudem führt eine nicht vorhandene bzw. allenfalls geringe Abbindeexpansion bei mehreren Herstellungsdurchgängen mit identisch gewählter Einbettmasse (EM) vorteilhafterweise zu geringeren absoluten Schwankungen, so dass gleichbleibendere Gussergebnisse erzielt werden können.

Im Hinblick auf die vorangehend beschriebene, allenfalls geringe thermische Expansion einer bevorzugten Einbettmasse (EM) kann der Anteil an kristallinem SiO₂ in der Einbettmasse gegenüber herkömmlichen Einbettmassen reduziert werden. Besonders bevorzugt ist daher eine Einbettmasse (EM), die weniger als 30 Gew.-%, vorzugsweise weniger als 10 Gew.-%, vorzugsweise weniger als 1 Gew.-% an kristallinem SiO₂ umfasst, besonders bevorzugt wobei die Einbettmasse (EM) frei von kristallinem SiO₂ ist, insbesondere frei von Quarz und Cristobalit. Somit lässt sich vorteilhafterweise die Gefahr der Silikose sowie das Risiko einer Lungenkrebs-Erkrankung reduzieren bzw. vermeiden.

Ein weiterer Vorteil der Einbettmasse (EM) auf Basis von Tonerdezement ist eine hohe Lagerstabilität, insbesondere im Vergleich zu Phosphat-gebundenen Bindesystemen. Zudem weisen die Bestandteile einer Einbettmasse (EM) hinsichtlich Ihrer Zusammensetzung sowie gegebenenfalls vorhandener Verunreinigungen vorteilhafterweise keine starken Schwankungen auf, so dass reproduzierbare Ergebnisse erzielt werden können.

Ein besonderer Vorteil der Einbettmasse (EM) (wie oben beschrieben) besteht zudem darin, dass als Anmisch-Liquid für die Einbettmasse (EM) Wasser, insbesondere destilliertes Wasser, verwendet werden kann, sodass keine besonderen Anmisch-Liquide benötigt werden, welche die Herstellung einer Dental-Restauration gegebenenfalls nachteilig beeinflussen könnten.

Bevorzugt ist eine Einbettmasse (EM) (wie oben beschrieben), wobei der bzw. einer, mehrere oder sämtliche der feuerfesten Füllstoffe ausgewählt sind aus der Gruppe bestehend aus Tonerde, insbesondere tabulare Tonerde und reaktive Tonerde, Spinell (MgAl₂O₄), Mullit, Zirkon-Mullit, amorphem SiO₂, insbesondere Quarzgut, kristallinem SiO₂, insbesondere Quarz und anderen Modifikationen von kristallinem SiO₂ (z. B. Cristobalit), und Mineralfasern. Die enthaltenen Bestandteile können dabei jeweils in unterschiedlichen Korngrößenfraktionen enthalten sein.

Besonders bevorzugt umfasst oder besteht eine Einbettmasse (EM) aus folgenden Bestandteilen:
- 5 - 50 Gew.-% an Calciumaluminatzement,
- 10 - 30 Gew.-% an amorphem SiO₂, insbesondere Quarzgut,
- 10 - 70 Gew.-% an Tonerde (Al₂O₃),
- 0 - 40 Gew.-% an Spinell,
- 0 - 10 Gew.-% an Mineralfasern,
- 0 - 5 Gew.-% an Calciumsulfat (alpha-Halbhydrat, Anhydrit),
- 0 - 1 Gew.-% an Abbindebeschleuniger sowie
- 0 - 3 Gew.-% an Dispersionsmittel.
Ein Abbindebeschleuniger kann sowohl in einer Einbettmasse (wie oben beschrieben) als auch in einem Anmisch-Liquid (wie oben beschrieben) enthalten sein. Vorzugsweise sind die eingesetzten Abbindebeschleuniger wasserlöslich. Als Abbindebeschleuniger wird bevorzugt ein Lithiumsalz eingesetzt, besonders bevorzugt Lithiumcarbonat. Lithiumcarbonat kann direkt als Pulver oder in Form einer Beschichtung einer Pulverkomponente entweder einer als Trockenmischung vorliegenden Einbettmasse (EM) zugegeben oder im Anmisch-Liquid, insbesondere (deionisiertem) Wasser, aufgelöst sein.
Sofern die Einbettmasse (EM) als Trockenmischung vorliegt und keinen Abbindebeschleuniger enthält, ist es bevorzugt, ein Anmisch-Liquid einzusetzen, welches einen Abbindebeschleuniger umfasst. Hierbei beträgt der Anteil an Abbindebeschleuniger, bezogen auf das Gesamtgewicht des Anmisch-Liquids, vorzugsweise 0,01 bis 0,1 Gew.-%, bevorzugt 0,03 bis 0,08 Gew.-%. Besonders bevorzugt handelt es sich bei dem Abbindebeschleuniger um Lithiumcarbonat.

Als Dispersionsmittel wird bevorzugt dispersive Tonerde verwendet, d.h. Tonerde, die sowohl mit einem Dispersionsmittel als vorzugsweise auch mit einem Abbindebeschleuniger (z.B. Lithiumcarbonat) überzogen bzw. versetzt ist.

Das Abbinden des vorangehend beschriebenen Bindersystems aus Einbettmasse und Anmisch-Liquid erfolgt vorzugsweise hydraulisch.

Eine Einbettmasse (EM) (wie oben beschrieben), eignet sich besonders gut zur Verwendung in einem erfindungsgemäßen Verfahren (wie oben beschrieben).

Herstellung einer Einbettmasse (EM) geeignet zur Verwendung in einem Verfahren zur Herstellung einer Dental-Restauration (D):

Folgende Bestandteile wurden zur Herstellung einer Einbettmasse (EM) eingesetzt:

| **Bestandteil** | **Beschreibung** | **Anteil [Gew.-%]** |
|---|---|---|
| Calciumaluminatzement | CA-270 (Almatis) | 29,985 |
| Quarzgut | TECO-SIL 50/100 (Quarzwerke) | 15,0 |
| Tonerde (Al₂O₃) | T60; 0 - 0,3 mm (Almatis) | 10,0 |
| Tonerde (Al₂O₃) | T60; -45 µm LI (Almatis) | 5,0 |
| Tonerde (Al₂O₃) | E-SY 1000 (Almatis) | 25,0 |
| Spinell | AR78; -45 µm (Almatis) | 6,5 |
| Spinell | AR78; -90 µm (Almatis) | 7,0 |
| Dispersive Tonerde (Al₂O₃) | ADW 1 (Almatis) | 1,5 |
| Beschleuniger (Li₂CO₃) | < 100 µm (Chemetall) | 0,015 |

Die einzelnen Bestandteile wurden mittels eines Mischers homogen vermischt (60 s im EasyMix von BEGO). Zum Anrühren der Einbettmasse wurde dest. Wasser zur Trockenmischung hinzugegeben (17 ml Liquid auf 100 g Trockenmischung) und anschließend 60 s mit einem Rührgerät (EasyMix von BEGO) verrührt.

Mit dem resultierenden, fließfähigen Mörtel, d.h. der nun zudem ein Anmisch-Liquid (hier: Wasser) umfassenden Einbettmasse (EM), wurde ein Wachs-Modell (M), nämlich eine 3-gliedrige Wachsbrücke, eingebettet und für 15 min in den Unterdruckschrank gestellt. Nach 20 - 30 min wurde die erhärtete Gießform (Muffel) entnommen und in den Vorwärmofen bei 1000 °C gelegt. Nach 1 h wurde in die vorgewärmte Gießform ein Gussmaterial (GM) (hier: Legierung Wirobond 280 von BEGO) vergossen. Nach vollständiger Abkühlung der Gießform bei Raumtemperatur wurde die Dental-Restauration ausgebettet.

## Patentansprüche

1. Verfahren zur Herstellung einer Dental-Restauration (D) mittels CAD-Cast-Verfahren, umfassend die Schritte
a) Erfassen dreidimensionaler, digitaler Daten der Dentition oder eines Teils der Dentition eines Patienten,
b) Entwerfen einer virtuellen Dental-Restauration (VD) unter Verwendung der erfassten dreidimensionalen, digitalen Daten, wobei die virtuelle Dental-Restauration (VD) gegenüber der herzustellenden Dental-Restauration (D) expandiert ist,
c) Fertigen eines Modells (M) unter Verwendung der entworfenen, virtuellen Dental-Restauration, so dass das Modell (M) gegenüber der herzustellenden Dental-Restauration (D) expandiert ist,
d) Einbetten des Modells (M) in eine Einbettmasse (EM),
e) Aushärten der Einbettmasse (EM) und Entfernen des Modells (M), so dass eine Gießform erhalten wird, und
f) Füllen, vorzugsweise Ausgießen, der Gießform mit einem Gussmaterial (GM) und Abkühlen des Gussmaterials (GM), so dass die Dental-Restauration (D) erhalten wird,
wobei
(i) die virtuelle Dental-Restauration (VD) und/oder
(ii) das Modell (M)
gegenüber der herzustellenden Dental-Restauration (D) so expandiert ist bzw. sind, dass die beim Abkühlen des Gussmaterials (GM) auftretende feste Schwindung des Gussmaterials (GM) teilweise oder vollständig ausgeglichen, d. h. kompensiert, wird, und
wobei eine Einbettmasse verwendet wird, deren Gesamtexpansion geringer ist als der Betrag der festen Schwindung des Gussmaterials (GM) und wobei die virtuelle Dental-Restauration (VD) und/oder das Modell (M) gegenüber der herzustellenden Dental-Restauration (D) insgesamt um 0,025 bis 3 % expandiert ist und ein oder mehrere Bereiche der virtuellen Dental-Restauration (VD) und/oder des Modells (M) gegenüber der herzustellenden Dental-Restauration (D) zusätzlich expandiert sind, wobei diese zusätzliche Expansion in einem oder mehreren ausgewählten Bereichen der virtuellen Dental-Restauration (VD) bzw. des Modells (M) im Bereich von 0,025 bis 1 % liegt bezogen auf die relative Längenänderung.

2. Verfahren nach Anspruch 1, wobei die dreidimensionalen, digitalen Daten in Schritt
a) durch
a1) Scannen der Dentition bzw. eines Teils der Dentition im Mund des Patienten oder
a2) Anfertigen eines Abdrucks der Dentition oder eines Teils der Dentition des Patienten und anschließendes Scannen des Abdrucks oder eines Teils des Abdrucks erfasst werden.

3. Verfahren nach einem der Ansprüche 1 oder 2, wobei das Gussmaterial (GM) zum Füllen der Gießform, vorzugsweise zum Ausgießen der Gießform in Schritt f) ausgewählt ist aus der Gruppe bestehend aus Cobalt, Nickel, Chrom, Titan, Gold, Silber, Palladium und Legierungen davon.

4. Verfahren nach einem der vorangehenden Ansprüche, wobei das Modell (M) ein Wachs- oder Kunststoff-Modell (M), vorzugsweise ein Wachsmodell (M) ist.

5. Verfahren nach einem der Ansprüche 1 bis 4, wobei die Einbettmasse (EM) zum Einbetten des Modells (M) in Schritt d) eine Einbettmasse ist, die
- 5 bis 50, vorzugsweise 10 bis 30 Gew.-% an Calciumaluminatzement,
- 40 bis 95, vorzugsweise 70 bis 90 Gew.-% an einem oder mehreren feuerfesten Füllstoffen
sowie optional
- 0 bis 5 Gew.-% an Calciumsulfat und/oder
- 0 bis 6 Gew.-% an einem oder mehreren weiteren Additiven umfasst oder daraus besteht,
wobei die Einbettmasse (EM) eine lineare Abbindeexpansion von 0 bis 0,75 %, vorzugsweise von 0 bis 0,3 %, besonders bevorzugt von 0 bis 0,1 % besitzt.

## Claims

1. Method for producing a dental restoration (D) by CAD casting, comprising the steps
a) recording three-dimensional, digital data of the dentition or of a part of the dentition of a patient;
b) creating a virtual dental restoration (VD) using the recorded three-dimensional, digital data, wherein the virtual dental restoration (VD) is expanded in relation to the dental restoration (D) to be produced;
c) preparing a model (M) using the created virtual dental restoration, such that the model (M) is expanded in relation to the dental restoration (D) to be produced;
d) embedding the model (M) in an embedding compound (EM);
e) hardening the embedding compound (EM) and removing the model (M), so that a casting mold is obtained, and
f) filling the casting mold, preferably by pouring, with a casting material (GM) and cooling the casting material (GM) such that the dental restoration (D) is obtained,
wherein
(i) the virtual dental restoration (VD) and/or
(ii) the model (M)
is or are expanded in relation to the dental restoration (D) to be produced such that the solid shrinkage of the casting material (GM) which takes place when the casting material (GM) cools is partly or completely compensated for, and
wherein an embedding compound is used, the overall expansion of which is less than the amount of the solid shrinkage of the casting material (GM) and wherein the virtual dental restoration (VD) and/or the model (M) is expanded by 0.025 to 3 % overall in relation to the dental restoration (D) to be produced and one or more areas of the virtual dental restoration (VD) and/or of the model (M) are further expanded in relation to the dental restoration (D) to be produced, wherein this further expansion in one or more selected areas of the virtual dental restoration (VD) or of the model (M) is in the range from 0.025 to 1 % with respect to the relative change in length.

2. Method according to claim 1, wherein the three-dimensional, digital data in step
a) is recorded by
a1) scanning the dentition or a part of the dentition in the mouth of the patient or
a2) taking an impression of the dentition or a part of the dentition of the patient and then scanning the impression or a part of the impression.

3. Method according to claim 1 or 2, wherein the casting material (GM) for filling the casting mold, preferably for pouring into the casting mold in step f) is selected from the group consisting of cobalt, nickel, chromium, titanium, gold, silver, palladium and alloys thereof.

4. Method according to any one of the preceding claims, wherein the model (M) is a wax or plastic model (M), preferably a wax model (M).

5. Method according to any of claims 1 to 4, wherein the embedding compound (EM) for embedding the model (M) in step d) is an embedding compound comprising or consisting of
- 5 to 50, preferably 10 to 30 wt.% of calcium aluminate cement,
- 40 to 95, preferably 70 to 90 wt.% of one or more of refractory fillers
and optionally
- 0 to 5 wt.% of calcium sulfate and/or
- 0 to 6 wt.% of one or more further additives,
wherein the embedding compound (EM) has a linear setting expansion of 0 to 0.75 %, preferably of 0 to 0.3 %, particularly preferably of 0 to 0.1 %.

## Revendications

1. Procédé de réalisation d'une restauration dentaire (D) par un procédé de coulée CAO, comprenant les étapes consistant à
a) acquérir des données numériques tridimensionnelles de la dentition ou d'une partie de la dentition d'un patient,
b) concevoir une restauration dentaire virtuelle (VD) en utilisant les données numériques tridimensionnelles acquises, dans lequel la restauration dentaire virtuelle (VD) est expansée par rapport à la restauration dentaire (D) à réaliser,
c) réaliser un modèle (M) en utilisant la restauration dentaire virtuelle conçue de sorte que le modèle (M) est expansé par rapport à la restauration dentaire (D) à réaliser,
d) enrober le modèle (M) dans une masse d'enrobage (EM),
e) durcir la masse d'enrobage (EM) et enlever le modèle (M) de sorte que l'on obtient un moule de coulée, et
f) remplir le moule de coulée d'un matériau de coulée (GM), de préférence en faisant couler celui-ci, et refroidir le matériau de coulée (GM) de sorte que l'on obtient la restauration dentaire (D),
dans lequel
(i) la restauration dentaire virtuelle (VD) et/ou
(ii) le modèle (M)
est ou bien sont expansé(e)(s) par rapport à la restauration dentaire (D) à réaliser, de telle sorte que le retrait solide du matériau de coulée (GM) qui se produit pendant le refroidissement du matériau de coulée (GM) est partiellement ou complètement équilibré, c'est-à-dire compensé, et
dans lequel on utilise une masse d'enrobage dont l'expansion totale est inférieure à la valeur du retrait solide du matériau de coulée (GM) et dans lequel la restauration dentaire virtuelle (VD) et/ou le modèle (M) est expansé dans l'ensemble de 0,025 à 3 % par rapport à la restauration dentaire (D) à réaliser, et, en sus, une ou plusieurs zones de la restauration dentaire virtuelle (VD) et/ou du modèle (M) sont expansées par rapport à la restauration dentaire (D) à réaliser, cette expansion supplémentaire dans une ou plusieurs zones sélectionnées de la restauration dentaire virtuelle (VD) ou bien du modèle (M) se situant dans la plage allant de 0,025 à 1 % par rapport au changement relatif de longueur.

2. Procédé selon la revendication 1, dans lequel les données numériques tridimensionnelles à l'étape a) sont acquises
a1) en balayant la dentition ou bien une partie de la dentition dans la bouche du patient ou
a2) en faisant une empreinte de la dentition ou d'une partie de la dentition du patient et puis en balayant ladite empreinte ou une partie de l'empreinte.

3. Procédé selon l'une quelconque des revendications 1 ou 2, dans lequel le matériau de coulée (GM) destiné à remplir le moule de coulée, de préférence à remplir le moule de coulée en le faisant couler, à l'étape f) est choisi dans le groupe constitué par le cobalt, le nickel, le chrome, le titane, l'or, l'argent, le palladium et leurs alliages.

4. Procédé selon l'une quelconque des revendications précédentes, dans lequel le modèle (M) est un modèle en cire ou en plastique (M), de préférence un modèle en cire (M).

5. Procédé selon l'une quelconque des revendications 1 à 4, dans lequel la masse d'enrobage (EM) destinée à enrober le modèle (M) à l'étape d) est une masse d'enrobage qui comprend
- entre 5 et 50, de préférence entre 10 et 30 % en poids de ciment d'aluminate de calcium,
- entre 40 et 95, de préférence entre 70 et 90 % en poids d'une ou de plusieurs charges réfractaires
ainsi que, en option,
- entre 0 bis 5 % en poids de sulfate de calcium et/ou
- entre 0 et 6 % en poids d'un ou de plusieurs autres additifs ou qui se compose de ceux-ci,
dans lequel la masse d'enrobage (EM) présente une expansion de prise linéaire comprise entre 0 et 0,75 %, de préférence entre 0 et 0,3 %, de manière particulièrement préférée entre 0 et 0,1 %.
